# EUROPEAN PATENT APPLICATION

(11) **EP 4 741 289 A1**
(43) Date of publication of application: **13.05.2026**
(21) Application number: 25213643.7
(22) Date of filing: 05.11.2025
(51) Int. Cl.: B64D 33/04, F02K 1/00, F02K 1/06

(54) **AIRCRAFT AND METHOD FOR OPERATING**

(30) Priority: 07.11.2024 US 202418939731
(71) Applicant: General Electric Company, Cincinnati, Ohio 45215 (US)
(72) Inventor: BLODGETT, Keith Edward James, Evendale, 45241 (US); ROBERTS, Alexa, Evendale, 45241 (US); BOWDEN, William Joseph, Evendale, 45241 (US)
(74) Representative: Openshaw & Co.

(57) **Abstract**

An aircraft (10) includes an engine (20) defining a centerline axis (24), the engine (20) comprising a fan (22) and a turbomachine (54) rotatably driving the fan (22), the turbomachine (54) including an exhaust section (36) comprising an outlet nozzle (38), the outlet nozzle (38) including a fixed portion (40) and a movable portion (42), wherein the movable portion (42) is movable from a first position to a second position, wherein when the movable portion (42) is in the first position, the movable portion (42) is aligned with the centerline axis (24), and wherein when the movable portion (42) is in the second position, the movable portion (42) is canted downward in the vertical direction and outward in the lateral direction relative to the centerline axis (24), and wherein the movable portion (42) includes an end (44) engaging the fixed portion (40), wherein when the movable portion (42) is in the first position, the end (44) defines a nonzero cant angle with the centerline axis (24).

## Description

### FIELD

The present disclosure relates to a gas turbine engine for an aircraft, specifically to an outlet nozzle for the gas turbine engine.

### BACKGROUND

A gas turbine engine generally includes a turbomachine and a rotor assembly. Gas turbine engines, such as turbofan engines, may be used for aircraft propulsion. In the case of a turbofan engine, the rotor assembly may be configured as a fan assembly. Other types of engines include propfan engines, turbojet engines, turboshaft engines, turboprop engines, turbofan engines, and unducted turbine engines. For an aircraft with an under-wing open fan engine installation, the engine is close-coupled with the wing such that the engine may be pitched down relative to the aircraft to improve performance and noise. This arrangement may result in exhaust gases from the engine interacting with a trailing edge flap system.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a perspective, schematic view of an exemplary engine of an aircraft.
FIG. 2 is a magnified, schematic view of the exemplary engine of FIG. 1.
FIG. 3 is a cross-sectional, schematic view of the exemplary engine of FIG. 1.
FIG. 4 is a rear view of the exemplary engine of FIG. 1 with a movable portion of an outlet nozzle in a first position.
FIG. 5 is a rear view of the exemplary engine of FIG. 1 with the movable portion of the outlet nozzle in a second position.
FIG. 6A is a side, magnified view of the outlet nozzle of the exemplary engine of FIG. 1 in the first position.
FIG. 6B is a side, magnified view of the outlet nozzle of the exemplary engine of FIG. 1 in the second position.
FIG. 7 is a block diagram of components for controlling the outlet nozzle of the exemplary engine of FIG. 1
FIG. 8 is a block diagram of an exemplary method for controlling the exemplary engine of FIG. 1.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

A "third stream" as used herein means a non-primary air stream capable of increasing fluid energy to produce a minority of total propulsion system thrust. A pressure ratio of the third stream may be higher than that of the primary propulsion stream (e.g., a fan or propeller driven propulsion stream). The thrust may be produced through a dedicated nozzle or through mixing of an airflow through the third stream with a primary propulsion stream or a core air stream, e.g., into a common nozzle.

The terms "coupled," "fixed," "attached to," and the like refer to both direct coupling, fixing, or attaching, as well as indirect coupling, fixing, or attaching through one or more intermediate components or features, unless otherwise specified herein.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

The present disclosure is generally related to an under-wing open fan engine installation for an aircraft. In such an installation, the engine is close-coupled with the wing such that the engine may be pitched down relative to the aircraft to improve performance and noise. This arrangement may result in exhaust gases from the engine interacting with a trailing edge flap system, which may cause unsteady loads and/or increase a temperature of flaps beyond conventional levels.

By incorporating a variable cant core nozzle to the engine, exhaust gases are directed away from the flaps when the flaps are deployed during a takeoff operation. More specifically, the variable cant core nozzle includes a movable portion that is rotated to a canted position away from the flaps during the takeoff operation. The movable portion is then rotated back to a centered position when the flaps are stowed, directing the exhaust gases in a direction along the centerline axis of the engine. The variable cant core nozzle reduces the exhaust gases that interact with the trailing edge flap system during takeoff while maintaining full rearward thrust during cruise.

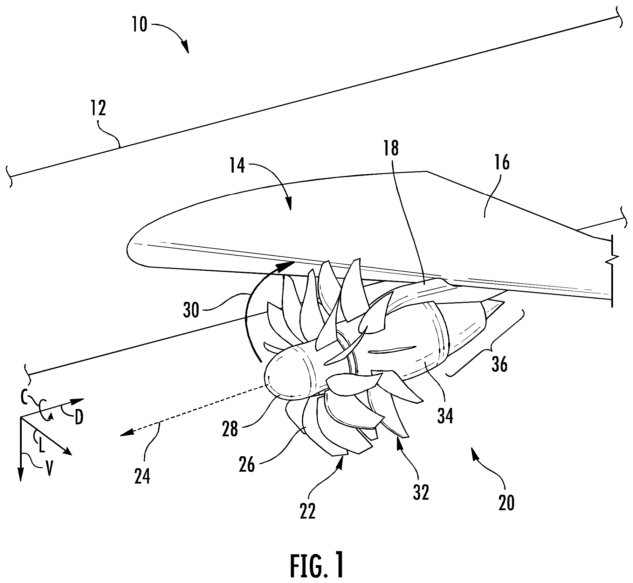

Referring now to the drawings, wherein identical numerals indicate the same elements throughout the figures, FIG. 1 is a perspective view of a portion of an aircraft 10. The aircraft 10 includes a fuselage 12, a wing 14 (with an upper surface 16), a pylon 18, and an engine 20. The aircraft 10 defines a vertical direction V, a downstream direction D, a lateral direction L, and a circumferential direction C. In this example, the downstream direction D is a direction of airflow from a front or forward end (e.g., to the left and out of the page in FIG. 1) of aircraft 10 to a rear or aft end (e.g., to the right and into the page in FIG. 1) of aircraft 10.

The fuselage 12 is a main body or vessel section of aircraft 10 that contains cargo, passengers, a crew, or a combination thereof during normal operation. The wing 14 is an aerodynamic portion of aircraft 10 mounted to and extending from fuselage 12 that provides lift for the aircraft 10. The upper surface 16 is a surface extending along a top-side of wing 14 relative to vertical direction V (shown as pointing downwards in FIG. 1). As will be appreciated, the wing 14 may define an airfoil shape, and the upper surface 16 may be suction side of the airfoil. Such a configuration may cause an upwash of the airflow approaching the wing 14 during flight, as will be described further below.

The engine 20 of the aircraft 10 includes a fan 22 having a plurality of fan blades 26, a spinner or nose 28, a plurality of stationary outlet guide vanes 32, a casing 34, and an exhaust section 36. Further, the engine 20 defines a centerline axis 24, and the fan 22 defines a direction of rotation 30 about the centerline axis 24. The engine 20 is mounted to the wing 14 by the pylon 18, which connects the engine 20 to the wing 14. The engine 20 is a machine or thrust producing system for providing thrust for the aircraft 10. In this example, the engine 20 is configured as an unducted single fan (e.g., fan 22). More specifically, in the embodiment shown, the engine 20 includes a single row of unducted rotor blades (e.g., fan blades 26, as described below).

The fan 22 is a rotatable propeller configured to rotate about the centerline axis 24. The fan 22 is mounted at an upstream end of the engine 20 and is configured to rotate relative to the casing 34. The fan 22 includes the fan blades 26, which are airfoil vanes configured to rotate with the fan 22 about the centerline axis 24. In this example, the fan blades 26 define a stage of unducted rotor blades. The fan blades 26 are connected to and extend outward along a radial direction from the nose 28 of the fan 22.

Moreover, for the exemplary embodiment depicted, the engine 20 includes the outlet guide vanes 32. The outlet guide vanes 32 are non-rotating airfoils or stator vanes that guide or redirect a direction of airflow. The outlet guide vanes 32 define a stage of outlet guide vanes that are located downstream of the fan blades 26 (e.g., the stage of unducted rotor blades). In one example, the outlet guide vanes 32 may be fixed stator vanes. In another example, the outlet guide vanes 32 can be adjustable or variable pitch guide vanes. The outlet guide vanes 32 are mounted to a portion of the casing 34. The casing 34 is a housing or exterior wall of the engine 20 that forms an external barrier or wall of engine 20.

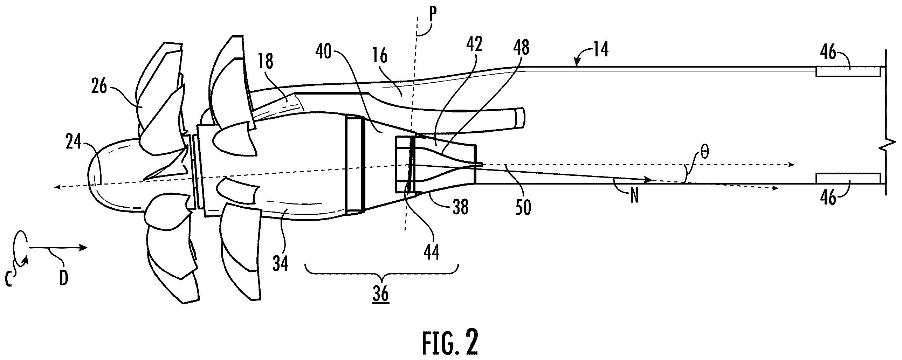

Now referring to FIG. 2, a magnified, schematic view of the engine 20 is shown. Specifically, the engine 20 is shown in FIG. 2 in a cruise operation mode, i.e., the aircraft 10 is at a specified altitude and no longer ascending or descending.

As described above, the engine 20 includes the exhaust section 36. The exhaust section 36 includes an outlet nozzle 38 including a fixed portion 40 and a movable portion 42. The exhaust section 36 defines a plane P at which the movable portion 42 contacts the fixed portion 40, and a vector N normal to the plane P defines a cant angle *θ* relative to the centerline axis 24 of the engine 20. That is, the movable portion 42 is canted relative to the rest of the outlet nozzle 38 to a nonzero cant angle *θ* such that a surface of an end 44 of the movable portion 42 is parallel to the plane P. In particular, the movable portion 42 is canted downward in the vertical direction and outward in the lateral direction relative to the centerline axis 24. The end 44 of the movable portion engaging the fixed portion defines the nonzero cant angle *θ* with the centerline axis 24.

The aircraft 10 includes a takeoff component 46 downstream of the outlet nozzle 38. The takeoff component 46 is a component that aids in lifting the aircraft 10 during a takeoff operating mode. Exemplary takeoff components 46 include, but are not limited to, high lift devices, a trailing edge flap system, the wing 14, or a horizontal tail.

The exhaust section 36 includes a plug 48 disposed in the movable portion 42 of the outlet nozzle 38. The plug 48 directs the exhaust gases into an exhaust stream 50. More specifically, as the exhaust gases flow through the outlet nozzle 38, the exhaust gases flow between an outer surface of the plug 48 and an inner surface of the movable portion 42. The plug 48 and the movable portion 42 are shaped to cause the exhaust gases to be directed inward radially in addition to axially forming a conical airflow that exits the outlet nozzle 38 into a stream, i.e., the exhaust stream 50. The exhaust stream 50 provides thrust to the aircraft 10 in the direction that the exhaust stream 50 flows. As described in further detail below, based on the position of the movable portion 42, at least some of the exhaust stream flows downward and away from the takeoff component 46.

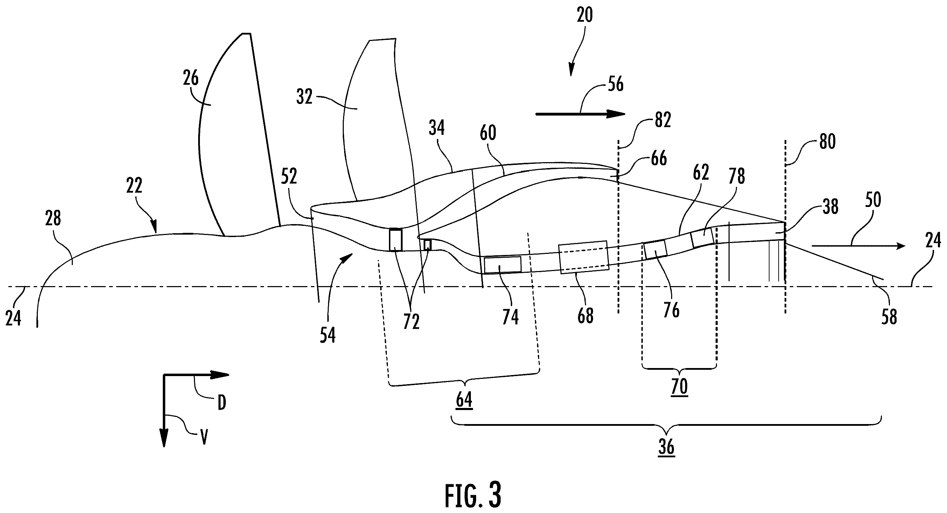

Referring now to FIG. 3, a cross-sectional view of the engine 20 is shown. The engine 20 includes an inlet 52, a turbomachine 54 defining the centerline axis 24, the fan 22 connected to and disposed upstream from the turbomachine 54, and the exhaust section 36 including the outlet nozzle 38. The engine 20 defines a fan stream 56 extending from the fan blades 26 and over the turbomachine 54. In FIG. 3, the fan stream 56 is depicted by an arrowhead disposed downstream from the fan 22.

In this example, the turbomachine 54 is coupled to the fan 22 via a shaft assembly (omitted from FIG. 3 for clarity) such that the turbomachine 54 is configured to drive rotation of the fan 22. The turbomachine 54 receives air through the inlet 52 and produces rotational energy for the fan 22 and thrust by compressing the air, igniting a mix of the air and fuel to produce a high pressure flow of combustion gases, and expanding the combustion gases.

The turbomachine 54 defines a bypass flowpath 60 and a working gas flowpath 62. The bypass flowpath 60 extends through a portion of the turbomachine 54 that is disposed outward along a radial direction from the working gas flowpath 62. A bypass outlet nozzle 66 of the bypass flowpath 60, briefly mentioned above, is an outlet nozzle for the bypass flowpath 60. In this example, the bypass flowpath 60 is a third stream flowpath (as described above). The bypass flowpath 60 diverts a flow of air away from the turbomachine 54 and delivers the air out of the bypass outlet nozzle 66 to provide additional thrust for the aircraft 10.

More specifically, for the embodiment depicted, the bypass flowpath 60 extends from the working gas flowpath 62 to the fan stream 56. More specifically, still, for the embodiment depicted, the bypass flowpath 60 extends from a low pressure compressor of a compressor section 64, at a location downstream from LPC blade 72 (e.g., a first stage of rotor blades of the low pressure compressor), to the fan stream 56. In such a manner, the bypass flowpath 60 may receive compressed air from the working gas flowpath 62 and the airflow from the bypass flowpath 60 through the bypass outlet nozzle 66 may contribute to an overall thrust production of the engine 20.

Air from the inlet 52 is provided to the working gas flowpath 62 and through the turbomachine 54. More specifically, the turbomachine 54 generally includes the compressor section 64, the combustion section (including, e.g., a combustor 68), and a turbine section 70 in serial flow order. The compressor section 64, the combustor 68, and the turbine section 70 together define at least in part the working gas flowpath 62. In the embodiment depicted, the compressor section 64 generally includes a low pressure compressor (with LPC blades 72) and a high pressure compressor (with HPC blades 74), and the turbine section 70 generally including a high pressure turbine (with HPT blades 76) and a low pressure turbine (with LPT blades 78). Air from the inlet 52 is progressively compressed through the low and high pressure compressors across the LPC blades 72 and across the HPC blades 74, respectively. The compressed air is then mixed with fuel and burned in the combustor 68 to generate combustion gases. The combustion gases are then expanded through the high and low pressure turbines across the HPT blades 76 and across the LPT blades 78, respectively extracting work. In certain exemplary embodiments, the high pressure turbine may be coupled to the high pressure compressor through a shaft or spool (not shown) such that rotation of the high pressure turbine drives the high pressure compressor. Similarly, in certain exemplary embodiments, the low pressure turbine may be coupled to the low pressure compressor through a shaft or spool (not shown) such that rotation of the low pressure turbine drives the low pressure compressor. The low pressure turbine may further be configured to drive the fan 22.

The outlet nozzle 38 defines a nozzle outlet plane 80. The nozzle outlet plane 80 is a plane extending along a face of the outlet nozzle 38. For example, with the outlet nozzle 38 including an annular shape, an orientation of the nozzle outlet plane 80 is defined by a plane along which an outer circumference of the outlet nozzle 38 lies. The nozzle outlet plane 80 extends along the face of the outlet nozzle 38. A bypass outlet nozzle plane 82 defines an exit plane of the bypass outlet nozzle 66 and the nozzle outlet plane 80 defines an exit plane of the outlet nozzle 38. In this example, thrust is produced by the fan blades 26, by the bypass outlet nozzle 66, and by the outlet nozzle 38. In one example, the engine 20 is configured to propel the aircraft 10 (and operate) at a speed of greater than Mach 0.74 (570 miles per hour) and less than Mach 0.90 (729 miles per hour). In another example, the engine 20 can be configured to propel aircraft 10 (and operate) at a speed of Mach 0.79 (610 miles per hour).

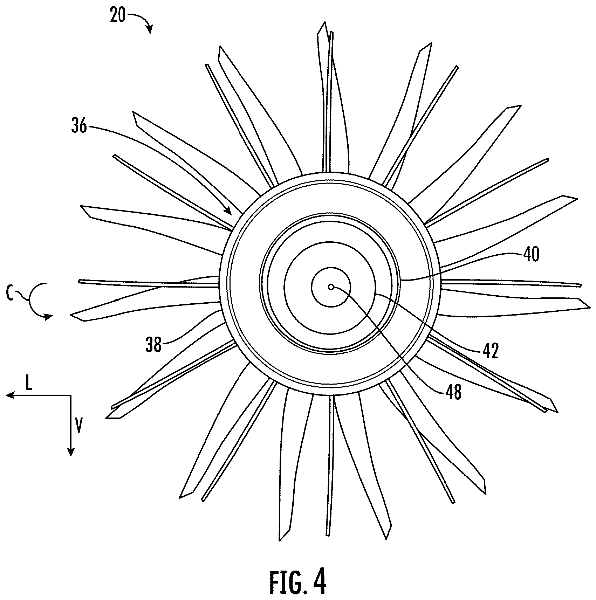

With reference to FIG. 4, a rear view of the engine 20 is shown. As described above, the engine 20 includes the exhaust section 36 with the outlet nozzle 38 including the fixed portion 40 and the movable portion 42. In the example of FIG. 4, the movable portion 42 is in a first position that is along the centerline axis 24 (FIG.2) of the engine 20, which is out of the page in FIG. 4. In the first position, all of the exhaust stream 50 (FIG. 2) from the engine 20 flows rearward through the outlet nozzle 38, such that 100% of the exhaust is in the rearward direction. In such a form, the aircraft 10 is operating in a cruise operating mode, and the takeoff components 46 (FIG. 2) are stowed away from the exhaust exiting the outlet nozzle 38. The plug 48 is aligned with the centerline axis 24 (FIG. 3).

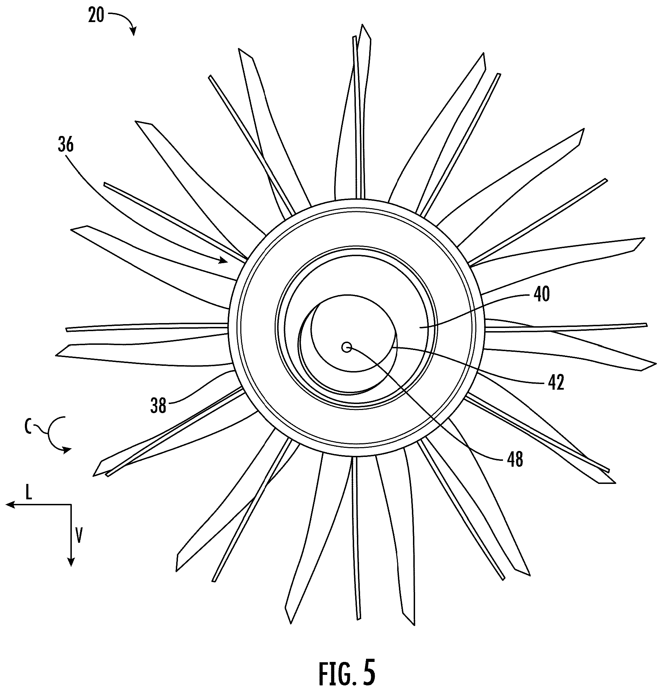

With reference to FIG. 5, another rear view of the engine 20 is shown. The aircraft 10 in FIG. 5 is operating in a takeoff operating mode, and a takeoff component (FIG. 2) extends outward toward the outlet nozzle 38. Here, the movable portion 42 is in a second position that is downward in the vertical direction V and outward in the lateral direction L relative to the centerline axis 24 (FIG. 2) such that the exhaust flows out from the outlet nozzle 38 in a direction away from the takeoff component 46 (FIG. 2). The direction away from the takeoff component 46 is determined based on the nonzero cant angle of the movable portion 42 relative to the fixed portion 40. In particular, an amount of exhaust of the exhaust stream 50 (FIG. 2) flowing from the outlet nozzle 38 downward in the vertical direction V and/or outward in the lateral direction L is in a range from 5-25% of a total amount of exhaust flowing from the outlet nozzle 38. By directing some of the exhaust downward and outward, the takeoff component 46 (FIG. 2) is protected from impingement by the exhaust stream 50 while most of the thrust from the exhaust continues forward.

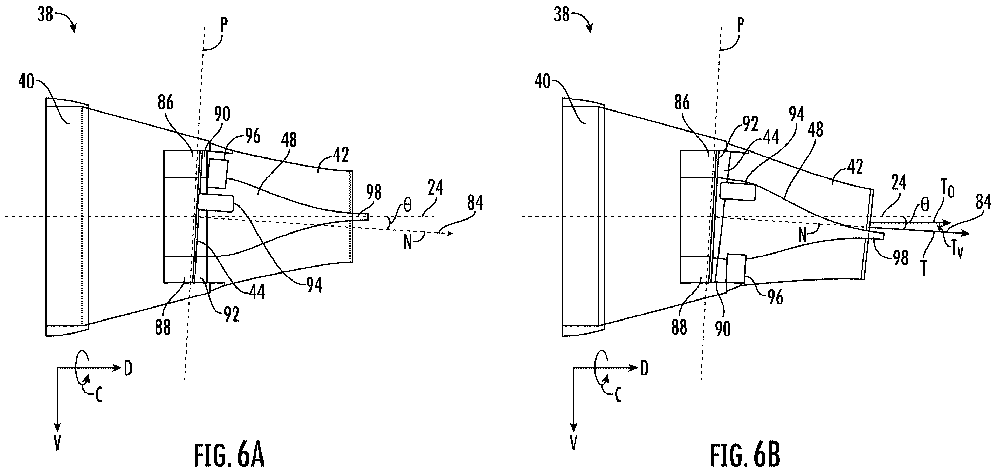

Now referring to FIGS. 6A-6B, side views of the outlet nozzle 38 for the exhaust section 36 of the engine 20 are shown. FIG. 6A shows the outlet nozzle 38 with the movable portion 42 in the first position. FIG. 6B shows the outlet nozzle 38 with the movable portion 42 in the second position.

As described above, the outlet nozzle 38 defines a plane P that is canted relative to the centerline axis 24 of the engine 20 by a nonzero cant angle θ. In particular the outlet nozzle 38 defines a central axis 84 that aligns with the normal vector N of the plane. The movable portion 42 of the outlet nozzle 38 rotates about the central axis 84 from the first position to the second position.

The fixed portion 40 of the outlet nozzle 38 has an upper portion 86 and a lower portion 88, and the movable portion 42 of the outlet nozzle 38 has a first portion 90 and a second portion 92. In the first position shown in FIG. 6A, the first portion 90 of the movable portion 42 is above the centerline axis 24 and the second portion 92 of the movable portion 42 is below the centerline axis 24. Thus, the upper portion 86 of the fixed portion 40 and the first portion 90 of the movable portion 42 abut each other, and the lower portion 88 of the fixed portion 40 and the second portion 92 of the movable portion 42 abut each other. In such a form, a surface of the end 44 of the movable portion 42 aligns with the plane P. It will be appreciated that a seal may be placed between the movable portion 42 and the fixed portion 40, such as a stepped, flexible surface, a turkey-feather seal, or the like. Such a seal reduces or inhibits air leakage from the circular motion of the movable portion 42 and an elliptical shape of the fixed portion 40.

It will be appreciated that, because the end 44 of the movable portion 42 is substantially annular, the first portion 90 and the second portion 92 of the movable portion 42 are defined by a specific angle range relative to an origin. In the first position, the topmost part of the movable portion 42 is the origin and defines 0 degrees, and the first portion 90 is an angle range about the origin, such as from -15 degrees to 15 degrees. The second portion 92 is an angle range opposing the origin, such as from 165 degrees to 195 degrees. That is, the first and second portions 90, 92 may have angle ranges of 30 degrees about the origin and opposing the origin. Alternatively, the first and second portions 90, 92 may have different angle ranges, such as 10 degrees, 20 degrees, 40 degrees, 45 degrees, or 90 degrees. When the angle range is 90 degrees, the first portion 90 is a first half of the movable portion 42, and the second portion 92 is a second half of the movable portion 42.

In the second position shown in FIG. 6B, the movable portion 42 is rotated 180 degrees about the central axis 84 of the outlet nozzle 38 (generally in a circumferential direction C of the engine 20, see FIGS. 4 and 5). In the second position, the first portion 90 of the movable portion 42 abuts the lower portion 88 of the fixed portion 40, and the second portion 92 of the movable portion 42 abuts the upper portion 86 of the fixed portion 40. That is, the first portion 90 of the movable portion 42 is rotated below the centerline axis 24, and the second portion 92 of the movable portion 42 is rotated above the centerline axis 24. In such a form, the surface of the end 44 of the movable portion 42 is no longer aligned with the plane P, and only the bottommost point of the end 44 of the movable portion 42 meets the plane P at the bottommost portion of the fixed portion 40.

The outlet nozzle 38 includes at least one actuator 94 configured to rotate the movable portion 42 along the fixed portion 40 from the first position to the second position. The actuator 94 is attached to the fixed portion 40 and drives the movable portion 42. In particular, the actuator 94 may include a suitable movement device, such as a wheel or gear, that rotates the movable portion 42. The actuator 94 may be of any suitable type, such as a linear actuator or a rotary actuator. One actuator 94 is shown in the Figures, and it will be appreciated that the outlet nozzle 38 may include more than one actuator 94 to rotate the movable portion 42.

The actuator 94 can rotate the movable portion 42 to a third position between the first position and the second position. That is, the actuator 94 rotates the movable portion 42 an angle of 180 degrees about the central axis 84 from the first position to the second position, and the actuator 94 can rotate the movable portion 42 to a different angle from the first position, such as 90 degrees, 120 degrees, 150 degrees, or another angle.

The outlet nozzle 38 further includes at least one strut 96 connecting the plug 48 to the movable portion 42. Specifically, FIGS. 6A-6B show one strut 96, and it will be appreciated that the outlet nozzle 38 may include more than one strut 96. The strut 96 moves the plug 48 with the movable portion 42 when the actuator 94 rotates the movable portion 42. Referring back to FIG. 6A, when the movable portion 42 is in the first position, the plug 48 is aligned with the centerline axis 24, and the strut 96 is disposed adjacent to the upper portion 86 of the fixed portion 40 of the outlet nozzle 38. Additionally, the plug 48 includes an end 98 extending aft of the movable portion 42, and when the movable portion 42 is in the first position, the end 98 of the plug 48 is above the central axis 84 of the outlet nozzle 38 in the vertical direction V.

Referring back to FIG. 6B, when the movable portion 42 is in the second position, the plug 48 is offset from the centerline axis 24, and the strut 96 is disposed adjacent to the lower portion 88 of the fixed portion 40. Additionally, when the movable portion 42 is in the second position, the end 98 of the plug 48 is below the central axis 84 of the outlet nozzle 38 in the vertical direction V. By moving the plug 48 below the central axis 84, the exhaust gases form a conical airflow into the exhaust stream 50 (FIG. 2) away from the takeoff component 46 (FIG. 2).

In the second position, a specific amount of thrust is directed downward in the vertical direction V. The thrust is represented by a vector T and can be represented as the sum of two vectors representing the thrust Tv in the vertical direction D (the "vertical thrust" Tv) and the thrust T_{D} in the downstream direction D (the "downstream thrust" T_{D}). In the second position, the amount of vertical thrust Tv may be in a range from 5% to 25% of the total thrust. Directing 5% to 25% of the total thrust downward in the vertical direction V as vertical thrust Tv allows for the exhaust stream 50 to be directed away form the takeoff component 46 without adversely affecting takeoff of the aircraft 10. In particular, by having the movable portion 42 of the outlet nozzle 38, more thrust may be directed downward during takeoff than an outlet nozzle with a fixed cant angle could provide while still allowing for full downstream thrust during cruise. In the first position (FIG. 6A), all of the thrust T is in the downstream direction D, and by rotating the movable portion 42 to the second position or a third position between the first position and the second position, the amount of vertical thrust Tv can be specified.

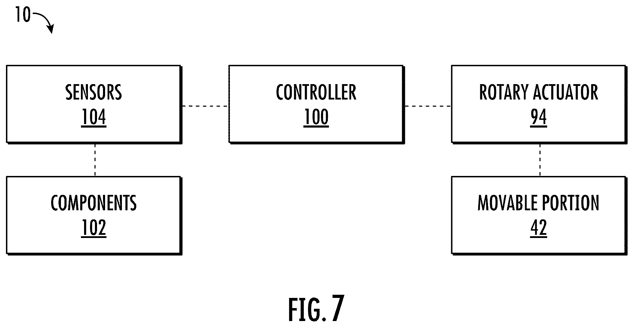

Now referring to FIG. 7, a block diagram of portions of the aircraft 10 is shown. Specifically, FIG. 7 shows how a controller 100 controls the movable portion 42 (FIG. 2) of the outlet nozzle 38 (FIG. 2) based on operation data from components 102 of the aircraft 10.

The controller 100 is configured to actuate the actuator 94 based on operation data collected from the aircraft 10. The controller 100 is a computer including a processor and a memory that communicates with one or more sensors 104 and the actuator 94. The controller 100 provides instructions to the actuator 94 based on data received from the sensors 104.

The sensors 104 collect the operation data from one or more components 102 of the aircraft 10, and the controller 100 receives the operation data from the sensors 104. Specifically, the controller 100 receives data from at least from the takeoff component 46 (FIG. 2), such as a flap of a trailing edge flap system or a high lift device. Additionally, the sensors 104 may collect operation data from components 102 of the engine, such as the turbines, the compressors, fuel injectors, among others. The operation data includes at least one of: an altitude, a speed, a Mach number, a fuel flow rate, an external ambient temperature, an external ambient pressure, a pitch angle, among others.

Based on the operation data, the controller 100 determines whether the aircraft 10 is about to initiate a takeoff operating condition. In this context, the "takeoff operating condition" is when the aircraft 10 takes off from the ground before reaching a cruise altitude. Certain components 102 are operational during the takeoff operating condition, such as the trailing edge flap system and the high lift device. The takeoff operating condition may be determined by one or more of the following conditions that are based on the operation data: an altitude being below an altitude threshold, a Mach number being below a Mach number threshold, a speed being below a speed threshold, a pitch angle being above a pitch angle threshold, an ambient air pressure being above an air pressure threshold, an ambient temperature being above a temperature threshold, or combinations thereof. When the controller 100 determines that the aircraft 10 is about to initiate the takeoff operating condition, the controller 100 actuates the actuator 94 to rotate the movable portion 42 of the outlet nozzle 38 to a position that is angled away from the fixed portion 40 of the outlet nozzle 38, such as the second position shown above in FIG. 6B.

Based on additional operation data, the controller 100 determines whether the aircraft 10 is no longer in the takeoff operating condition, such as in a cruise operating condition. In the cruise operating condition, the aircraft 10 maintains a specified altitude and a specified speed. As an example, the controller 100 determines that the aircraft 10 is in the cruise operating condition based on one or more of the following conditions: the altitude being above the altitude threshold, the Mach number being above the Mach number threshold, the speed being above the speed threshold, the pitch angle being below the pitch angle threshold, the ambient air pressure being below the air pressure threshold, the ambient temperature being below the temperature threshold, or combinations thereof. When the controller 100 determines that the aircraft 10 is in the cruise operating condition, the controller actuates the actuator 94 to rotate the movable portion 42 of the outlet nozzle 38 back to the first position, aligned with the fixed portion 40 of the outlet nozzle 38 and the centerline axis 24 of the engine 20.

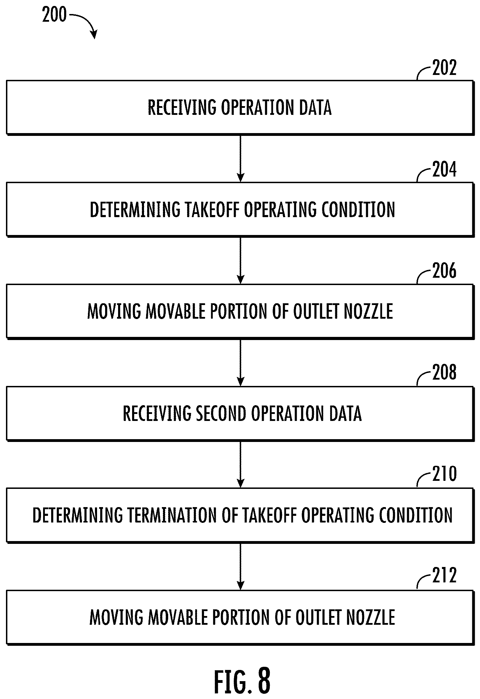

Referring now to FIG. 8, a flow diagram of a method 200 of operating a gas turbine engine of an aircraft in accordance with an exemplary aspect of the present disclosure is provided. The method 200 may be utilized to operate one or more of the exemplary engines described above with reference to FIGs. 1 through 7. However, in other exemplary aspects, the method 200 may additionally or alternatively be utilized to operate any other suitable engine for an aircraft.

As is depicted, the method 200 includes at (202) receiving operation data from one or more components of the aircraft. A controller receives data collected from one or more sensors about operation of the engine. As an example, the sensors collect data at least from the takeoff component, such as a flap of a trailing edge flap system or a high lift device. Additionally, the sensors may collect operation data from components of the engine, such as the turbines, the compressors, fuel injectors, among others. The operation data include at least one of: an altitude, a speed, a Mach number, a fuel flow rate, an external ambient temperature, an external ambient pressure, a pitch angle, among others.

The method 200 includes at (204) determining whether the aircraft is in a takeoff operating condition. Certain components are operational during the takeoff operating condition, such as the trailing edge flap system and the high lift device. The takeoff operating condition may be determined by one or more of the following conditions that are based on the operation data: an altitude being below an altitude threshold, a Mach number being below a Mach number threshold, a speed being below a speed threshold, a pitch angle being above a pitch angle threshold, an ambient air pressure being above an air pressure threshold, an ambient temperature being above a temperature threshold, or combinations thereof.

The method 200 includes at (206) moving a movable portion of an outlet nozzle to a position away from a takeoff component. As an example, the controller actuates an actuator to rotate the movable portion of the outlet nozzle to a specified position that is angled away from a fixed portion of the outlet nozzle. In the specified position, an amount of exhaust flowing from the outlet nozzle downward in the vertical direction is in a range from 5-25% of a total amount of exhaust flowing from the outlet nozzle.

The method 200 includes at (208) receiving second operation data collected by the sensors from one or more components of the aircraft. The second operation data may include similar data to the operation data collected at (202). In particular, the controller may collect data from sensors that are in communication with the takeoff component.

The method 200 includes at (210) determining whether the aircraft has terminated or is about to terminate the takeoff operating condition. Upon terminating the takeoff operating condition, the aircraft operates in a different operating condition, such as a cruise operating condition. In the cruise operating condition, the aircraft maintains a specified altitude and a specified speed. As an example, the controller determines that the aircraft is in the cruise operating condition based on one or more of the following conditions: the altitude being above the altitude threshold, the Mach number being above the Mach number threshold, the speed being above the speed threshold, the pitch angle being below the pitch angle threshold, the ambient air pressure being below the air pressure threshold, the ambient temperature being below the temperature threshold, or combinations thereof.

The method 200 includes at (212) moving the movable portion of the outlet nozzle back to an initial position. In the cruise operating condition, the takeoff components are stowed away from the engine, and outlet nozzle provides all of the exhaust in the rearward direction. Specifically, the controller can actuate the actuator to rotate the movable portion of the outlet nozzle back to the initial position.

Further aspects are provided by the subject matter of the following clauses:

An aircraft defining a vertical direction, a lateral direction, and a downstream direction, the aircraft including an engine defining a centerline axis, the engine including a fan and a turbomachine rotatably driving the fan, the turbomachine including an exhaust section including an outlet nozzle, the outlet nozzle including a fixed portion and a movable portion, wherein the movable portion is movable from a first position to a second position, wherein when the movable portion is in the first position, the movable portion is aligned with the centerline axis, and wherein when the movable portion is in the second position, the movable portion is canted downward in the vertical direction and outward in the lateral direction relative to the centerline axis, and wherein the movable portion includes an end engaging the fixed portion, wherein when the movable portion is in the first position, the end defines a nonzero cant angle with the centerline axis.

The aircraft of any of the preceding claims, wherein the engine is a turbofan engine, wherein during a takeoff operating condition, an amount of thrust from 5% to 25% of a total thrust of the turbofan engine is provided from the airflow through the exhaust section.

The aircraft of any of the preceding claims, wherein the exhaust section defines a plane at which the movable portion contacts the fixed portion, wherein a vector normal to the plane is angled relative to the centerline axis to define the nonzero cant angle with the centerline axis.

The aircraft of any of the preceding claims, further including a takeoff component downstream of the outlet nozzle, wherein when the outlet nozzle is in the second position, the exhaust flows out from the outlet nozzle in a direction away from the takeoff component.

The aircraft of any of the preceding claims, wherein the exhaust section further includes an actuator configured to rotate the movable portion along the fixed portion from the first position to the second position.

The aircraft of any of the preceding claims, wherein the actuator is configured to rotate the movable portion along the fixed portion to a third position between the first position and the second position.

The aircraft of any of the preceding claims, wherein the exhaust section further includes a plug disposed in the movable portion and a strut connecting the plug to the movable portion.

The aircraft of any of the preceding claims, wherein, when the movable portion is in the first position, the plug is aligned with the centerline axis and, when the movable portion is in the second position, the plug is offset from the centerline axis.

The aircraft of any of the preceding claims, wherein, when the movable portion is in the first position, the strut is disposed adjacent to an upper portion of the fixed portion of the outlet nozzle, and when the movable portion is in the second position, the strut is disposed adjacent to a lower portion of the fixed portion of the outlet nozzle.

The aircraft of any of the preceding claims, wherein the outlet nozzle defines a central axis, wherein the second position is in a range from 90 to 180 degrees away from the first position about the central axis of the outlet nozzle.

The aircraft of any of the preceding claims, wherein the central axis of the outlet nozzle is angled relative to the centerline axis of the engine by the nonzero cant angle.

The aircraft of any of the preceding claims, wherein the exhaust section further includes a plug including an end extending aft from the movable portion, wherein the end of the plug is above the central axis of the outlet nozzle in the vertical direction when the movable portion is in the first position, and wherein the end of the plug is below the central axis of the outlet nozzle in the vertical direction when the movable portion is in the second position.

A method for operating an aircraft, the method including receiving operation data indicative of the aircraft being in or initiating a takeoff operating condition, in response to receiving the operation data, moving a movable portion of an outlet nozzle of an exhaust section of the aircraft from a first position that is aligned with a fixed portion of the outlet nozzle to a second position that is angled away from the fixed portion of the outlet nozzle, receiving second operation data indicative of the aircraft terminating or having terminated the takeoff operating condition, and in response to receiving the second operation data, moving the movable portion from the second position to the first position.

The method of any of the preceding claims, wherein, in the second position, an amount of exhaust flowing from the outlet nozzle downward in the vertical direction is in a range from 5-25% of a total amount of exhaust flowing from the outlet nozzle.

The method of any of the preceding claims, wherein the one or more components include at least one of a flap or a high lift device.

The method of any of the preceding claims, wherein moving the movable portion from the first position to the second position further includes moving the movable portion away from the flap or the high lift device.

The method of any of the preceding claims, wherein at least one of the operation data or the second operation data include a Mach number of the aircraft.

The method of any of the preceding claims, wherein moving the movable portion further includes actuating an actuator disposed in the outlet nozzle to rotate the movable portion about a central axis of the outlet nozzle.

The method of any of the preceding claims, wherein the second position is in a range from 90 to 180 degrees away from the first position about the central axis of the outlet nozzle.

The method of any of the preceding claims, wherein moving the movable portion further includes rotating an end of the movable portion along the fixed portion.

A turbine engine includes an engine defining a centerline axis, the engine comprising a fan and a turbomachine rotatably driving the fan, the turbomachine including an exhaust section comprising an outlet nozzle, the outlet nozzle including a fixed portion and a movable portion, wherein the movable portion is movable from a first position to a second position, wherein when the movable portion is in the first position, the movable portion is aligned with the centerline axis, and wherein when the movable portion is in the second position, the movable portion is canted downward in the vertical direction and outward in the lateral direction relative to the centerline axis, and wherein the movable portion includes an end engaging the fixed portion, wherein when the movable portion is in the first position, the end defines a nonzero cant angle with the centerline axis.

The turbine engine of any of the preceding clauses, wherein the turbine engine is a turbofan engine, wherein during a takeoff operating condition, an amount of thrust from 5% to 25% of a total thrust of the turbofan engine is provided from the airflow through the exhaust section.

The turbine engine of any of the preceding clauses, wherein the exhaust section defines a plane at which the movable portion contacts the fixed portion, wherein a vector normal to the plane is angled relative to the centerline axis to define the nonzero cant angle with the centerline axis.

The turbine engine of any of the preceding clauses, wherein the exhaust section further includes an actuator configured to rotate the movable portion along the fixed portion from the first position to the second position.

The turbine engine of any of the preceding clauses, wherein the actuator is configured to rotate the movable portion along the fixed portion to a third position between the first position and the second position.

The turbine engine of any of the preceding clauses, wherein the exhaust section further includes a plug disposed in the movable portion and a strut connecting the plug to the movable portion.

The turbine engine of any of the preceding clauses, wherein, when the movable portion is in the first position, the plug is aligned with the centerline axis and, when the movable portion is in the second position, the plug is offset from the centerline axis.

The turbine engine of any of the preceding clauses, wherein, when the movable portion is in the first position, the strut is disposed adjacent to an upper portion of the fixed portion of the outlet nozzle, and when the movable portion is in the second position, the strut is disposed adjacent to a lower portion of the fixed portion of the outlet nozzle.

The turbine engine of any of the preceding clauses, wherein the outlet nozzle defines a central axis, wherein the second position is in a range from 90 to 180 degrees away from the first position about the central axis of the outlet nozzle.

The turbine engine of any of the preceding clauses, wherein the central axis of the outlet nozzle is angled relative to the centerline axis of the engine by the nonzero cant angle.

The turbine engine of any of the preceding clauses, wherein the exhaust section further includes a plug including an end extending aft from the movable portion, wherein the end of the plug is above the central axis of the outlet nozzle in the vertical direction when the movable portion is in the first position, and wherein the end of the plug is below the central axis of the outlet nozzle in the vertical direction when the movable portion is in the second position.

An aircraft defining a vertical direction, a lateral direction, and a downstream direction, the aircraft comprising: an engine defining a centerline axis, the engine comprising a fan and a turbomachine rotatably driving the fan, the turbomachine including an exhaust section comprising an outlet nozzle, the outlet nozzle including a fixed portion and a movable portion, wherein the movable portion is movable from a first position to a second position, wherein when the movable portion is in the first position, the movable portion is aligned with the centerline axis, and wherein when the movable portion is in the second position, the movable portion is canted downward in the vertical direction and outward in the lateral direction relative to the centerline axis, and wherein the movable portion includes an end engaging the fixed portion, wherein when the movable portion is in the first position, the end defines a nonzero cant angle with the centerline axis.

The aircraft of any one of the preceding clauses, wherein the engine is a turbofan engine, wherein during a takeoff operating condition, an amount of thrust from 5% to 25% of a total thrust of the turbofan engine is provided from the airflow through the exhaust section.

The aircraft of any one of the preceding clauses, wherein the exhaust section defines a plane at which the movable portion contacts the fixed portion, wherein a vector normal to the plane is angled relative to the centerline axis to define the nonzero cant angle with the centerline axis.

The aircraft of any one of the preceding clauses, further comprising a takeoff component downstream of the outlet nozzle, wherein when the outlet nozzle is in the second position, the exhaust flows out from the outlet nozzle in a direction away from the takeoff component.

The aircraft of any one of the preceding clauses, wherein the exhaust section further comprises an actuator configured to rotate the movable portion along the fixed portion from the first position to the second position.

The aircraft of any one of the preceding clauses, wherein the actuator is configured to rotate the movable portion along the fixed portion to a third position between the first position and the second position.

The aircraft of any one of the preceding clauses, wherein the exhaust section further comprises a plug disposed in the movable portion and a strut connecting the plug to the movable portion.

The aircraft of any one of the preceding clauses, wherein, when the movable portion is in the first position, the plug is aligned with the centerline axis and, when the movable portion is in the second position, the plug is offset from the centerline axis.

The aircraft of any one of the preceding clauses, wherein, when the movable portion is in the first position, the strut is disposed adjacent to an upper portion of the fixed portion of the outlet nozzle, and when the movable portion is in the second position, the strut is disposed adjacent to a lower portion of the fixed portion of the outlet nozzle.

The aircraft of any one of the preceding clauses, wherein the outlet nozzle defines a central axis, wherein the second position is in a range from 90 to 180 degrees away from the first position about the central axis of the outlet nozzle.

The aircraft of any one of the preceding clauses, wherein the central axis of the outlet nozzle is angled relative to the centerline axis of the engine by the nonzero cant angle.

The aircraft of any one of the preceding clauses, wherein the exhaust section further comprises a plug including an end extending aft from the movable portion, wherein the end of the plug is above the central axis of the outlet nozzle in the vertical direction when the movable portion is in the first position, and wherein the end of the plug is below the central axis of the outlet nozzle in the vertical direction when the movable portion is in the second position.

A method for operating an aircraft, the method comprising: receiving operation data indicative of the aircraft being in or initiating a takeoff operating condition; in response to receiving the operation data, moving a movable portion of an outlet nozzle of an exhaust section of the aircraft from a first position that is aligned with a fixed portion of the outlet nozzle to a second position that is angled away from the fixed portion of the outlet nozzle; receiving second operation data indicative of the aircraft terminating or having terminated the takeoff operating condition; and in response to receiving the second operation data, moving the movable portion from the second position to the first position.

The method of any one of the preceding clauses, wherein, in the second position, an amount of exhaust flowing from the outlet nozzle downward in the vertical direction is in a range from 5-25% of a total amount of exhaust flowing from the outlet nozzle.

The method of any one of the preceding clauses, wherein the one or more components include at least one of a flap or a high lift device.

The method of any one of the preceding clauses, wherein moving the movable portion from the first position to the second position further comprises moving the movable portion away from the flap or the high lift device.

The method of any one of the preceding clauses, wherein at least one of the operation data or the second operation data include a Mach number of the aircraft.

The method of any one of the preceding clauses, wherein moving the movable portion further comprises actuating an actuator disposed in the outlet nozzle to rotate the movable portion about a central axis of the outlet nozzle.

The method of any one of the preceding clauses, wherein the second position is in a range from 90 to 180 degrees away from the first position about the central axis of the outlet nozzle.

The method of any one of the preceding clauses, wherein moving the movable portion further comprises rotating an end of the movable portion along the fixed portion.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An aircraft (10) defining a vertical direction, a lateral direction, and a downstream direction, the aircraft (10) comprising:
an engine (20) defining a centerline axis (24), the engine (20) comprising a fan (22) and a turbomachine (54) rotatably driving the fan (22), the turbomachine (54) including an exhaust section (36) comprising an outlet nozzle (38), the outlet nozzle (38) including a fixed portion (40) and a movable portion (42),
wherein the movable portion (42) is movable from a first position to a second position, wherein when the movable portion (42) is in the first position, the movable portion (42) is aligned with the centerline axis (24), and wherein when the movable portion (42) is in the second position, the movable portion (42) is canted downward in the vertical direction and outward in the lateral direction relative to the centerline axis (24), and
wherein the movable portion (42) includes an end (44) engaging the fixed portion (40), wherein when the movable portion (42) is in the first position, the end (44) defines a nonzero cant angle with the centerline axis (24).

2. The aircraft (10) of any of the preceding claims, wherein the engine (20) is a turbofan engine (20), wherein during a takeoff operating condition, an amount of thrust from 5% to 25% of a total thrust of the turbofan engine (20) is provided from the airflow through the exhaust section (36).

3. The aircraft (10) of any of the preceding claims, wherein the exhaust section (36) defines a plane at which the movable portion (42) contacts the fixed portion (40), wherein a vector normal to the plane is angled relative to the centerline axis (24) to define the nonzero cant angle with the centerline axis (24).

4. The aircraft (10) of any of the preceding claims, further comprising a takeoff component (46) downstream of the outlet nozzle (38), wherein when the outlet nozzle (38) is in the second position, the exhaust flows out from the outlet nozzle (38) in a direction away from the takeoff component (46).

5. The aircraft (10) of any of the preceding claims, wherein the exhaust section (36) further comprises an actuator (94) configured to rotate the movable portion (42) along the fixed portion (40) from the first position to the second position.

6. The aircraft (10) of any of the preceding claims, wherein the actuator (94) is configured to rotate the movable portion (42) along the fixed portion (40) to a third position between the first position and the second position.

7. The aircraft (10) of any of the preceding claims, wherein the exhaust section (36) further comprises a plug (48) disposed in the movable portion (42) and a strut (96) connecting the plug (48) to the movable portion (42).

8. The aircraft (10) of any of the preceding claims, wherein the outlet nozzle (38) defines a central axis (84), wherein the second position is in a range from 90 to 180 degrees away from the first position about the central axis (84) of the outlet nozzle (38).

9. The aircraft (10) of any of the preceding claims, wherein the central axis (84) of the outlet nozzle (38) is angled relative to the centerline axis (24) of the engine (20) by the nonzero cant angle.

10. A method (200) for operating an aircraft (10), the method (200) comprising:
receiving operation data indicative of the aircraft (10) being in or initiating a takeoff operating condition;
in response to receiving the operation data, moving a movable portion (42) of an outlet nozzle (38) of an exhaust section (36) of the aircraft (10) from a first position that is aligned with a fixed portion (40) of the outlet nozzle (38) to a second position that is angled away from the fixed portion (40) of the outlet nozzle (38);
receiving second operation data indicative of the aircraft (10) terminating or having terminated the takeoff operating condition; and
in response to receiving the second operation data, moving the movable portion (42) from the second position to the first position.

11. The method (200) of claim 10, wherein, in the second position, an amount of exhaust flowing from the outlet nozzle (38) downward in the vertical direction is in a range from 5-25% of a total amount of exhaust flowing from the outlet nozzle (38).

12. The method (200) of any of claims 10-11, wherein the one or more components (102) include at least one of a flap or a high lift device.

13. The method (200) of any of claims 10-12, wherein moving the movable portion (42) from the first position to the second position further comprises moving the movable portion (42) away from the flap or the high lift device.

14. The method (200) of any of claims 10-13, wherein moving the movable portion (42) further comprises actuating an actuator (94) disposed in the outlet nozzle (38) to rotate the movable portion (42) about a central axis (84) of the outlet nozzle (38).

15. The method (200) of any of claims 10-14, wherein the second position is in a range from 90 to 180 degrees away from the first position about the central axis (84) of the outlet nozzle (38).
